# EUROPEAN PATENT SPECIFICATION

(11) **EP 2 237 904 B1**
(45) Date of publication and mention of the grant of the patent: **03.08.2011**
(21) Application number: 07851969.1
(22) Date of filing: 28.12.2007
(51) Int. Cl.: B21D 53/14, F16G 5/16

(54) **METHOD FOR MANUFACTURING TRANSVERSE ELEMENTS FOR A DRIVE BELT**
VERFAHREN ZUR HERSTELLUNG VON QUERELEMENTEN FÜR EINEN ANTRIEBSRIEMEN
PROCEDE DE FABRICATION D'ELEMENTS TRANSVERSAUX POUR COURROIE D'ENTRAÎNEMENT

(43) Date of publication of application: 13.10.2010
(73) Proprietor: Robert Bosch GmbH, 70442 Stuttgart (DE)
(72) Inventor: SATOSHI, Koyama, NL-5000 AM Tilburg (NL); VAN DINTER, Ernst, NL-5000 AM Tilburg (NL); PRINSEN, Lucas Hendricus Robertus Maria, 5062 LV Oisterwijk (NL)
(74) Representative: Plevier, Gabriel Anton Johan Maria
(86) International application number: PCT/NL2007/050711
(87) International publication number: WO 2009/084946

(56) References cited:
- EP-A- 1 128 088
- EP-A- 1 371 431
- JP-A- 2004 136 361
- JP-A- 2006 192 459

## Description

The present invention relates to a method for manufacturing a transverse element components of a flexible drive belt. Such a drive belt is predominantly used as a means for power transmission between two adjustable pulleys of the well-known continuously variable transmission that is mainly applied in motor vehicles. The present type of drive belt is generally known and is, for example, described in the European patent publication EP-A-1 554 507.

The known drive belt is composed of a multitude relatively thin transverse metal elements slideably provided on two laminated endless tensile means of the belt that are each composed of a set of mutually nested flat and thin metal rings, alternatively denoted bands. The rings are normally made from a maraging steel that combines a/o the properties of great tensile strength and good resistance against tensile stress and bending fatigue. The transverse elements are normally made from a basic chrome-carbon steel such as 75Cr1. The manufacturing of the transverse elements at least includes the step of gradually unwinding of a spirally wound up strip of base material and advancing, i.e. feeding it to a blanking device, the step of sequentially cutting-out transverse elements from the strip by the blanking device and the step of providing additional material hardness to a batch of such transverse elements in a hardening heat treatment. The latter process step of hardening typically includes at least three stages. In a first or austenizing stage of the hardening process a phase transformation from the basic ferrite material structure into austenite is effected by heating the transverse elements to above the critical temperature for austenite phase formation and sufficiently long for completing such phase transformation, in a second or quenching stage the transverse elements are rapidly cooled to form martensite, and in a third or tempering stage the transverse elements are heated again, however to a temperature that is considerably lower than the above austenizing temperature, for reducing the brittleness of the transverse element material.

It has already been proposed in the art, for example in JP-A-2004/136361, to modify the above manufacturing method by almost, but not entirely completely cutting out the transverse elements in the blanking process step, thus leaving a connecting tab between the circumference of the elements and a remaining frame part of the strip and, thereafter, to feed the strip from the blanking device to a hardening process station and hardening it as a whole. Only after hardening the transverse elements are completely separated from the said frame part. Hereby, a continuous process for the blanking and the hardening of transverse elements is realized and, more importantly, the elaborate handling of the still unhardened and therefore delicate and thus easily damaged individual transverse elements in-between blanking and hardening is favorable avoided.

Although the known manufacturing method is favorable in terms of the limited handling effort, the effectiveness, i.e. efficiency thereof is considered sub-optimal. This problem originates from the fact that the production rate attainable with a common blanking device exceeds that of even an optimized hardening process station by a considerable margin. For example, the known blanking devices can easily operate at a rate of over 5 blanking strokes per second, whereto the strip needs to be advanced, i.e. fed, to the blanking device for over 5 times the width dimension of the transverse elements or typically for more than 200 mm each second. However, at least the tempering stage of the hardening process typically requires in the order of 1 hour to complete, which implies that a furnace for heating the strip in the tempering stage would have to have the entirely impractical length of about 0.5 km to treat the advancing strip, i.e. to keep up with the production rate of the blanking device. Thus, in a practical embodiment of this known manufacturing method, the blanking device can only perform, i.e. be operated, at a fraction of its maximum stroke rate.

It could theoretically be opted to again wind-up the strip into a spiral coil immediately after blanking in order to separate the process step of blanking from the other steps of the manufacturing method, which process set-up is also suggested by JP-A-2004/136361. However, this variant of the known manufacturing method appears to be of theoretical relevance only, since in reality the transverse elements will bend under the forces exerted in and between the layers of the coil, will become entangled and/or will even breakaway from the frame part of the strip by a shearing of the said connecting tabs. Hereby, it is noted that after blanking the base material is still comparatively soft, at least is yet to be hardened, so that the transverse elements may deform and/or become damaged relatively easily.

The present invention sets out to improve on the above known manufacturing method and to create a variant thereof that is both practically feasible and that favorably allows the blanking device to perform at a much higher stroke rate.

According to the present invention the above object is realized in general with the manufacturing method of the following claim 1. According to the invention, after the said process step of blanking, but at the latest in advance of the said hardening process stage of tempering, the continuous strip of base material is sequentially cut into strip sections of limited length, e.g. between 0.5 and 2.5 meter. Hereby, each strip section contains at least one transverse element, but preferably a larger number of 25 up to 150 individual transverse elements. Accordingly, the unhardened transverse elements need not be handled individually nor directly, since the frame part of the said strip sections is available thereto. Moreover, by tempering several of the said strip sections in parallel in one tempering furnace and/or by placing several such tempering furnaces in parallel, the hardening process station can be easily and favorably arranged to keep up with the production rate of the blanking device. In this respect, the said strip sections are preferably loaded into a carrier rack, which can hold a number of such strip sections, in advance of the tempering stage of the hardening process. Hereby, the tempering furnace is designed to accommodate one or more of such carrier racks, such that a few or possibly only one tempering furnace is required to keep up with the production rate of the blanking device. Preferably, the carrier rack is provided with clamping means for holding the said strip sections that engage only the said frame part thereof.

Further in the above respect, it is considered highly favorable to inductively heat the strip of base material in the austenizing stage, either as a whole, whereto the strip is continuously carried through an induction coil that creates a controlled high frequency electromagnetic field, or as cut into individually strip sections that are heated in parallel inside a number of such induction coils. Especially in this latter arrangement of the process, the said subsequent quenching stage of the manufacturing method can be performed very effectively by flushing the induction coils containing the heated strip sections with a liquid or a gas after the austenizing stage has been completed. In this way, the hardening heat treatment of the transverse elements will be ultimately uniform and can be easily and accurately controlled.

Thus, depending on whether the hardening process stage of austenizing and quenching are performed as a continuous process on the advancing strip as a whole, or as a batch-wise processes by treating several previously cut-off strip sections in parallel, the process step of cutting the strip into sections of limited length according to the invention is respectively carried out either only after the said quenching stage has been completed, or in advance of the process step of hardening, i.e. immediately following the process step of blanking.

The invention will now be elucidated further with reference to the figures enclosed.
Figure 1 is a schematic representation in a perspective view of a known continuously variable transmission provided with a drive belt and two pulleys.
Figure 2 is a cross section of the known drive belt oriented in the longitudinal direction thereof providing a frontal view of a transverse element thereof.
Figure 3 is a schematic representation of the presently relevant part of the known manufacturing method for the transverse element.
Figure 4 show a strip of base material after the process step of blanking has been performed thereon.
Figure 5 is a schematic representation of a possible set-up of the manufacturing method for the transverse element in accordance with the invention.

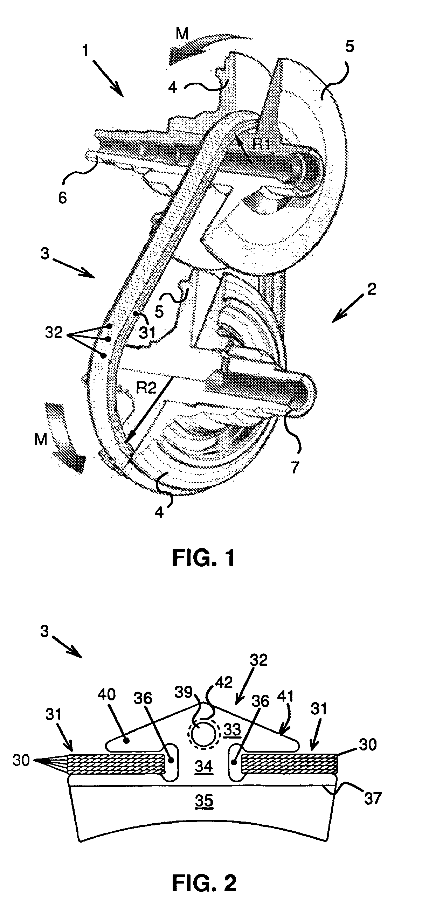

Figure 1 shows the central parts of a known continuously variable transmission that is commonly applied in the drive-line of motor vehicles between the engine and the drive wheels thereof. The transmission comprises two pulleys 1, 2, each provided with two pulley discs 4, 5, between which a so-called pushbelt-type drive belt 3 is present for transmitting a rotational movement M and an accompanying torque from one pulley 1, 2 to the other 2, 1. The pulley discs 4, 5 are shaped generally conical and at least one pulley disc 4 is incorporated in the transmission axially moveable along a respective pulley shaft 6, 7 on which both discs 4, 5 are placed. The transmission normally also comprises activation means that impose on the said at least one movable disc 4 an axially oriented clamping force directed towards the respective other pulley disc 5 such that the drive belt 3 is clamped there between. A geometric transmission ratio of the transmission is determined by the quotient of an effective contact radius R2 of the drive belt 3 at the driven pulley 2 and an effective contact radius R1 of the drive belt 3 at the driving pulley 1, which may be varied continuously in range of values.

The drive belt 3 comprises two laminated endless tensile means 31 and several hundred of relatively thin transverse elements 32 that are provided on the tensile means 31 movable along the longitudinal direction thereof and oriented predominantly transversely thereto. The transverse elements 32 take-up the said clamping force, such that at rotation of a driving pulley 1, friction between the discs 4, 5 and the drive belt 3, causes the elements 32 to be thrust in the said direction of movement M from the said driving pulley 1 to a driven pulley 2 and back again, thereby being guided and supported by the tensile means 31.

Figure 2 provides a cross section of the known drive belt 3, which cross section is oriented in the longitudinal direction thereof. In figure 2 the transverse element 32 of the drive belt 3 is shown in a frontal view. The element 32 comprises three main parts, namely an essentially arrowhead-shaped top part 33, an essentially trapezoidal bottom part 35 and an essentially oblong pillar part 34 of relatively limited width that interconnects the said top and bottom parts 33, 35. The transverse elements 32 are incorporated in the drive belt 3 mounted on the endless tensile means 31 thereof that are each formed by a number of thin and flat metal rings 30 that are nested one around the other in the radial direction and that are each accommodated in a respective opening or recess 36 in the transverse element 32, each recess 36 provided on either side of the pillar part 34 between the element's top and bottom parts 33, 35.

Further, a longitudinally protruding stud 39 is provided on a front main face 40 of the transverse element 32, which stud 39 is to be accommodated in a hole 42 provided in a rear main face 41 of an adjacent transverse element 32. The stud 39 and hole 42 are provided to mutually align adjacent transverse elements 32 of the drive belt 3 transversely to its longitudinal direction during operation in the transmission. At the bottom part 35 of the transverse elements 32 below a so-called tilting edge 37 its thickness tapers-off at least effectively, so as to allow adjacent elements 32 to mutually tilt about the axially oriented tilting edge 37 when clamped between the discs 4, 5 of the pulleys 1, 2.

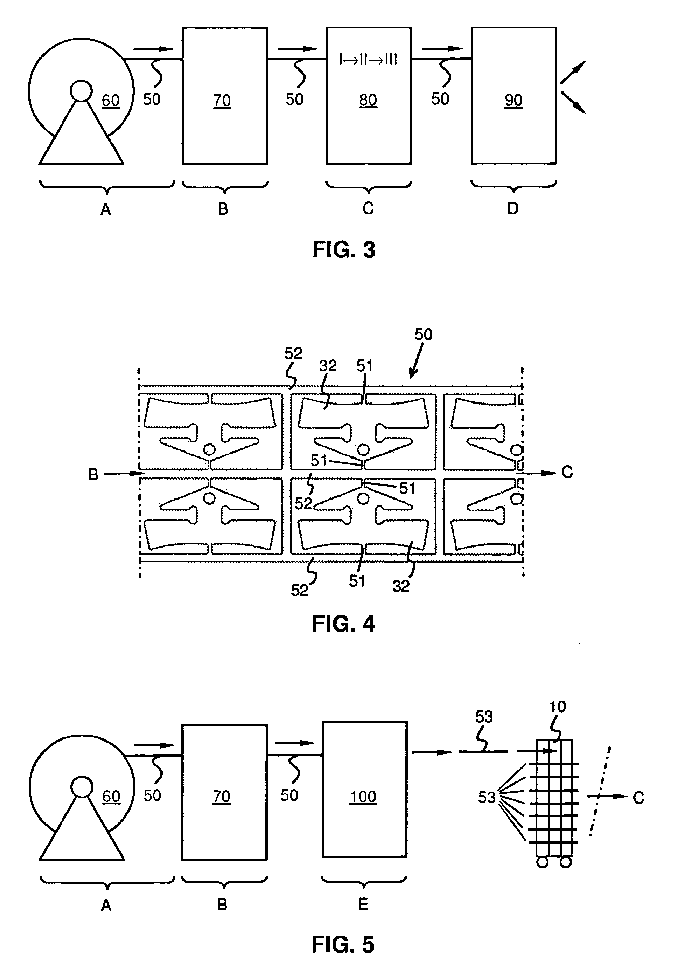

In figure 3 the relevant parts of a well known method for manufacturing the transverse elements 32 are schematically illustrated. The known method subsequently comprises the steps:
A) gradually unwinding a coil 60 of a spirally wound-up continuous strip 50 of steel base material several meters in length and feeding the advancing strip 50 to a blanking device 70,
B) cutting-out, i.e. blanking, the transverse elements 32 from the advancing strip 50 by means of the blanking device 70, while leaving a connecting tab 51 between the circumference of the elements 32 and a remaining frame part 52 of the strip 50, which strip layout is illustrated in figure 4,
C) heat treating, i.e. hardening, the transverse elements to provide additional hardness thereto by means of a hardening process station 80 that includes an austenizing stage I, wherein the transverse elements 32 are heated to austenize the steel base material, a quenching stage II, wherein the transverse elements 32 are rapidly cooled to form martensite, and a tempering stage III, wherein the transverse elements 32 are heated again, but to a temperature considerably below the austenizing temperature, for reducing the brittleness of the transverse element material, and of
D) separating the transverse elements 32 from the frame part 52 of the strip 50 by cutting-off the connecting tab 51 in a separating process station 90.

In figure 4 a top view of the strip 50 is provided after the above process step of blanking B has been performed thereon. After blanking the strip 50 is composed of the frame part 52 and the transverse elements 32, which main parts 52, 32 of the strip 50 are still connected to each other through a connecting tab 51.

A problem of this known manufacturing method is that the practically attainable production rates of the respective process steps A-D, in particular that of blanking B and hardening C, at least the tempering stage III thereof (but conventionally also the stages I and II of austinizing and quenching respectively) are entirely different. As a result, the slowest process step of hardening C determines the overall production rate of the entire process line of subsequently performed process steps A-D and the at least potentially much faster process step of blanking B is performed sub-optimally. The present invention aims at combining the advantage of the transverse elements 32 being connected to the frame part 52 of the strip 50 during hardening C with the desire to be able to make optimum use of the production rate of the blanking process step B, which aim is realized by the new set-up of the manufacturing method for the transverse elements 32 that is illustrated in figure 5.

Figure 5 shows the preferred set-up of the manufacturing method for the transverse elements 32 in accordance with the invention. In the new method, after the process step of blanking B and in an additional process step of strip cutting E, strip sections 53 of a comparatively limited length of, for instance, 1 meter are sequentially cut of from the advancing continuous strip 50 by means of a strip cutting process station 100. These cut-off strip sections 53 are subsequently carried -for example by first loading several such strip sections 53 into a carrier rack 101 and then transporting the rack 101 as a whole, as illustrated in figure 5- to the hardening process station 80. Accordingly, the unhardened transverse elements 32 need neither be handled individually nor directly, since the frame part 52 of the said strip sections 53 is available thereto. Moreover, by hardening several of the said strip sections 53 in parallel, the hardening process station 80 can be easily and favorably configured to keep up with the maximum production rate of the blanking device 70.

## Claims

1. Method for manufacturing transverse elements (32) for a drive belt (3) that is composed of a number of such transverse metal elements (32) slideably provided on a laminated endless tensile means (31), which method comprises the process steps of:
- feeding a strip (50) of steel base material for the transverse elements (32) to a blanking device 70,
- cutting-out the transverse elements (32) from the strip (50) nearly completely, leaving the elements (32) connected to a remaining frame part (52) of the strip (50) through a connecting tab (51),
- hardening the transverse elements (32) while connected to the frame part (52) of the strip (50) in three stages, whereof a first or austenizing stage entails heating the transverse elements (32) to form austenite phase, a second or quenching stage entails rapidly cooling the transverse elements (32) to form martensite phase and whereof a third or tempering stage entails re-heating the transverse elements to a Temperature that is considerably lower than the austenizing temperature, to reduce the brittleness of the transverse elements (32), and of
- completely separating the transverse elements (32) from the frame part (52) of the strip (50) by cutting through the connecting tab (51),
**characterized in that**, at some stage after the process step of cutting-out the transverse elements (32) has been completed, but at the latest in advance of the said third hardening process stage of tempering, the strip (50) is cut into strip sections (53) that each include a section of the frame part (52) and at least one whole transverse element (32) connected thereto.

2. Method for manufacturing transverse elements (32) for a drive belt (3) according to claim 1, **characterized in that**, the strip (50) is cut into strip sections (53) before the said process step of hardening the transverse elements (32) commences.

3. Method for manufacturing transverse elements (32) for a drive belt (3) according to claim 1, **characterized in that**, the strip (50) is cut into strip sections (53) after the said second hardening process stage of quenching has been completed and before the said third hardening process stage of tempering commences.

4. Method for manufacturing transverse elements (32) for a drive belt (3) according to any one of the preceding claims, **characterized in that**, each strip section (53) includes between 25 and 150 transverse elements (32).

5. Method for manufacturing transverse elements (32) for a drive belt (3) according to any one of the preceding claims, **characterized in that**, each strip section (53) is between 0.5 and 2.5 meter, preferably about 1 meter in length.

6. Method for manufacturing transverse elements (32) for a drive belt (3) according to any one of the preceding claims, **characterized in that**, in the said first hardening process stage of austenizing, the strip (50) or the strip sections (53) is/are inductively heated.

7. Method for manufacturing transverse elements (32) for a drive belt (3) according to any one of the preceding claims, **characterized in that**, at some stage after the process step of cutting the strip (50) into strip sections (53), a number of the strip sections (53) is loaded into a carrier rack (101) and at least a tempering furnace of a tempering stage of the said process step of hardening the transverse elements (32) is designed to accommodate one or more of such carrier racks (101).

8. Method for manufacturing transverse elements (32) for a drive belt (3) according to claim 7, **characterized**, the carrier rack (101) is provided with clamping means for holding the said strip sections (53) that engage only the said frame part (52) thereof.

## Patentansprüche

1. Verfahren zur Herstellung von Querelementen (32) für einen Antriebsriemen (3), der aus mehreren solchen Metallquerelementen (32) besteht, die an laminierten Endloszugmitteln (31) verschiebbar vorgesehen sind, wobei das Verfahren die folgenden Prozessschritte umfasst:
- Zuführen eines Streifens (50) aus einem Stahlbasismaterial für die Querelemente (32) zu einer Stanzvorrichtung (70),
- fast vollständiges Ausschneiden der Querelemente (32) aus dem Streifen (50), wobei die durch eine Verbindungslasche (51) mit einem verbleibenden Rahmenteil (52) des Streifens (50) verbundenen Elemente (32) belassen werden,
- Härten der Querelemente (32), während sie mit dem Rahmenteil (52) des Streifens (50) verbunden sind, in drei Stufen, wobei die Querelemente (32) in einer ersten oder Austenitisierungsstufe zur Bildung der Austenitphase erwärmt werden, die Querelemente (32) in einer zweiten oder Abschreckstufe zur Bildung der Martensitphase schnell gekühlt werden und wobei die Querelemente in einer dritten oder Anlassstufe zur Reduzierung der Sprödigkeit der Querelemente (32) erneut auf eine Temperatur erwärmt werden, die bedeutend niedriger ist als die Austenitisierungstemperatur, und
- vollständiges Trennen der Querelemente (32) von dem Rahmenteil (52) des Streifens (50) durch Durchschneiden der Verbindungslasche (51),
**dadurch gekennzeichnet, dass** der Streifen (50) irgendwann nach Beendigung des Prozessschritts des Ausschneidens der Querelemente (32), aber spätestens vor der dritten Härtungsprozessstufe des Anlassens in Streifenabschnitte (53) geschnitten wird, die jeweils einen Abschnitt des Rahmenteils (52) und mindestens ein damit verbundenes ganzes Querelement (32) enthalten.

2. Verfahren zur Herstellung von Querelementen (32) für einen Antriebsriemen (3) nach Anspruch 1, **dadurch gekennzeichnet, dass** der Streifen (50) vor Beginn des Prozessschritts des Härtens der Querelemente (32) in Streifenabschnitte (53) geschnitten wird.

3. Verfahren zur Herstellung von Querelementen (32) für einen Antriebsriemen (3) nach Anspruch 1, **dadurch gekennzeichnet, dass** der Streifen (50) nach Beendigung der zweiten Härtungsprozessstufe des Abschreckens und vor Beginn der dritten Härtungsprozessstufe des Anlassens in Streifenabschnitte (53) geschnitten wird.

4. Verfahren zur Herstellung von Querelementen (32) für einen Antriebsriemen (3) nach einem der vorhergehenden Ansprüche, **dadurch gekennzeichnet, dass** jeder Streifenabschnitt (53) zwischen 25 und 150 Querelemente (32) enthält.

5. Verfahren zur Herstellung von Querelementen (32) für einen Antriebsriemen (3) nach einem der vorhergehenden Ansprüche, **dadurch gekennzeichnet, dass** jeder Streifenabschnitt (53) eine Länge zwischen 0,5 und 2,5 Metern, vorzugsweise von 1 Meter, aufweist.

6. Verfahren zur Herstellung von Querelementen (32) für einen Antriebsriemen (3) nach einem der vorhergehenden Ansprüche, **dadurch gekennzeichnet, dass** der Streifen (50) oder die Streifenabschnitte (53) in der ersten Härtungsprozessstufe des Austenitisierens induktiv erwärmt wird/werden.

7. Verfahren zur Herstellung von Querelementen (32) für einen Antriebsriemen (3) nach einem der vorhergehenden Ansprüche, **dadurch gekennzeichnet, dass** irgendwann nach dem Prozessschritt des Schneidens des Streifens (50) in Streifenabschnitte (53) mehrere der Streifenabschnitte (53) in ein Trägergestell (101) geladen werden und mindestens ein Anlassofen einer Anlassstufe des Prozessschritts des Härtens der Querelemente (32) zur Aufnahme eines oder mehrerer solcher Trägergestelle (101) ausgeführt ist.

8. Verfahren zur Herstellung von Querelementen (32) für einen Antriebsriemen (3) nach Anspruch 7, **dadurch gekennzeichnet, dass** das Trägergestell (101) mit Klemmmitteln zum Halten der Streifenabschnitte (53) versehen ist, die nur den Rahmenteil (52) davon in Eingriff nehmen.

## Revendications

1. Procédé de fabrication d'éléments transversaux (32) pour une courroie d'entraînement (3) qui se compose d'un certain nombre d'éléments métalliques transversaux (32) disposés de manière coulissante sur un moyen de traction sans fin laminé (31), le procédé comprenant les étapes de procédé consistant à :
- acheminer une bande (50) de matériau à base d'acier pour les éléments transversaux (32) à un dispositif de découpage à la presse (70),
- découper les éléments transversaux (32) de la bande (50) pratiquement complètement, en laissant les éléments (32) connectés à une partie de cadre restante (52) de la bande (50) par une languette de connexion (51),
- durcir les éléments transversaux (32) alors qu'ils sont connectés à la partie de cadre (52) de la bande (50) en trois étapes, dont une première étape, ou étape d'austénitisation, qui implique de chauffer les éléments transversaux (32) pour former une phase austénitique, une deuxième étape, ou étape de trempage, qui implique de refroidir rapidement les éléments transversaux (32) pour former une phase martensitique, et une troisième étape, ou étape de revenu, qui implique de re-chauffer les éléments transversaux à une température qui est nettement inférieure à la température d'austénitisation, pour réduire le caractère cassant des éléments transversaux (32), et
- séparer complètement les éléments transversaux (32) de la partie de cadre (52) de la bande (50) en découpant à travers la languette de connexion (51),
**caractérisé en ce que**, à un certain stade après l'achèvement de l'étape de processus consistant à découper les éléments transversaux (32), mais au plus tard avant ladite troisième étape de processus de durcissement constituée par le revenu, la bande (50) est découpée en sections de bande (53) qui incluent chacune une section de la partie de cadre (52) et au moins un élément transversal entier (32) connecté à celui-ci.

2. Procédé de fabrication d'éléments transversaux (32) pour une courroie d'entraînement (3) selon la revendication 1, **caractérisé en ce que** la bande (50) est découpée en sections de bande (53) avant que ladite étape de processus de durcissement des éléments transversaux (32) ne commence.

3. Procédé de fabrication d'éléments transversaux (32) pour une courroie d'entraînement (3) selon la revendication 1, **caractérisé en ce que** la bande (5-0) est découpée en sections de bande (53) après que ladite deuxième étape de processus de durcissement de trempage n'ait été achevée et avant que ladite troisième étape de processus de durcissement de revenu ne commence.

4. Procédé de fabrication d'éléments transversaux (32) pour une courroie d'entraînement (3) selon l'une quelconque des revendications précédentes, **caractérisé en ce que** chaque section de bande (53) comporte entre 25 et 150 éléments transversaux (32).

5. Procédé de fabrication d'éléments transversaux (32) pour une courroie d'entraînement (3) selon l'une quelconque des revendications précédentes, **caractérisé en ce que** chaque section de bande (53) mesure entre 0,5 et 2,5 mètres, de préférence environ 1 mètre de longueur.

6. Procédé de fabrication d'éléments transversaux (32) pour une courroie d'entraînement (3) selon l'une quelconque des revendications précédentes, **caractérisé en ce que** dans ladite première étape de processus de durcissement d'austénitisation, la bande (50) ou les sections de bande (53) est/sont chauffée(s) par induction.

7. Procédé de fabrication d'éléments transversaux (32) pour une courroie d'entraînement (3) selon l'une quelconque des revendications précédentes, **caractérisé en ce que**, à un certain stade après l'étape de processus consistant à découper la bande (50) en sections de bande (53), un certain nombre des sections de bande (53) est chargé dans un râteau porteur (101) et au moins un four de revenu d'une étape de revenu de ladite étape de processus de durcissement des éléments transversaux (32) est conçu pour recevoir un ou plusieurs desdits râteaux porteurs (101).

8. Procédé de fabrication d'éléments transversaux (32) pour une courroie d'entraînement (3) selon la revendication 7, **caractérisé en ce que** le râteau porteur (101) est pourvu de moyens de serrage pour retenir lesdites sections de bande (53) qui s'engagent avec seulement ladite partie de cadre (52) de celles-ci.
